(19) Europäisches Patentamt
European Patent Office
Office européen des brevets

(11) EP 1 020 216 B1

# (12) EUROPEAN PATENT SPECIFICATION

(45) Date of publication and mention of the grant of the patent:
**02.06.2004 Bulletin 2004/23**

(51) Int Cl.[7]: **B01D 53/94**, B01J 23/10, B01J 37/03

(21) Application number: **00100039.7**

(22) Date of filing: **04.01.2000**

## (54) Catalyst for purifying exhaust gas

Katalysator zur Reinigung von Abgasen

Catalyseur pour la purification des gaz d'échappement

(84) Designated Contracting States:
**DE FR GB**

(30) Priority: **18.01.1999 JP 982699**

(43) Date of publication of application:
**19.07.2000 Bulletin 2000/29**

(73) Proprietor: **Kabushiki Kaisha Toyota Chuo Kenkyusho**
**Aichi-gun, Aichi-ken, 480-1192 (JP)**

(72) Inventors:
- **Suzuki, Tadashi,**
  **c/o K.K. Toyota Chuo Kenkyusho**
  **Aichi-gun, Aichi-ken, 480-1192 (JP)**
- **Morikawa, Akira,**
  **c/o K.K. Toyota Chuo Kenkyusho**
  **Aichi-gun, Aichi-ken, 480-1192 (JP)**
- **Sobukawa, Hideo,**
  **c/o K.K. Toyota Chuo Kenkyusho**
  **Aichi-gun, Aichi-ken, 480-1192 (JP)**

(74) Representative: **Kramer - Barske - Schmidtchen**
**European Patent Attorneys**
**Patenta**
**Radeckestrasse 43**
**81245 München (DE)**

(56) References cited:
**EP-A- 0 684 072**
**EP-A- 0 834 348**
**FR-A- 2 736 343**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 020 216 B1

Printed by Jouve, 75001 PARIS (FR)

## Description

The present invention relates to a catalyst for purifying an exhaust gas which is used in exhaust systems of automobiles. More particularly, it relates to an improvement on heat resistance of an exhaust-gas-purifying catalyst which includes a ceria-zirconia composite oxide.

### Description of the Related Art

As an exhaust-gas-purifying catalyst which is used in exhaust systems of automobiles, a 3-way catalyst is used widely which purifies HC, CO and $NO_x$ simultaneously. This 3-way catalyst is arranged so that a porous oxide, such as alumina ($Al_2O_3$) and silica ($SiO_2$), makes a support and a noble metal, such as platinum (Pt) and rhodium (Rh), is loaded on the support. The HC and CO adsorbed on the catalyst is purified by oxidizing, and the $NO_x$ is purified by reducing.

This 3-way catalyst is designed so that it exhibits the highest conversions when it contacts with an exhaust gas whose air-fuel ratio of the air-fuel mixture is an ideal air-fuel ratio, i.e., a stoichiometric atmosphere. However, depending on the driving conditions of automobiles, the actual air-fuel ratio fluctuates on a rich side or a lean side about the stoichiometric atmosphere. Accordingly, the exhaust-gas atmosphere fluctuates as well. Consequently, high purifying performance cannot necessarily be secured by the 3-way catalyst of the aforementioned arrangement alone.

Hence, a 3-way catalyst has been known in which ceria ($CeO_2$) is included in the support. Since the ceria has an oxygen storage-and-release ability, oxygen is stored in the ceria in oxygen rich atmospheres, and is released in oxygen lean atmospheres. Therefore, the fluctuation of the exhaust-gas atmospheres can be relieved by including the ceria, and the purifying performance is upgraded. Further, it is preferable to include a ceria-zirconia composite oxide, in which ceria is composited with zirconia ($ZrO_2$), in a support. By compositing with the zirconia, the thermal stability of the ceria is enhanced remarkably.

For example, Japanese Unexamined Patent Publication (KOKAI) No. 10-182,155 (EP-A-O 834 348) discloses an exhaust-gas-purifying catalyst in which a noble metal is loaded on a composite oxide which includes at least two members selected from the group consisting of cerium, zirconium and aluminum.

By the way, the recent increment of high-speed driving, etc., resulted in considerably high temperatures of exhaust gases of automobiles. Accordingly, it is necessary to carry out the durability test on exhaust-gas-purifying catalysts under severer conditions.

In the aforementioned conventional exhaust-gas-purifying catalyst, no problem arises when the catalyst is subjected to a durability test in which it is heated at 1,000 °C for a few hours, for instance. However, when it is subjected to a severe durability in which it is heated at 1,000 °C for 20 hours, the following have been found out. Namely, depending on the composition of the support, the phase separation occurs in the solid solution of ceria and zirconia.

Further, general exhaust-gas-purifying catalysts employ a honeycomb-shaped substrate, which is formed of cordierite or a metallic foil and exhibits good heat resistance, and are used by forming a coating layer, which is formed on the substrate and includes a loaded particle loaded with a noble metal. However, when a catalyst, which is provided with a conventional coating layer including a composite oxide support disclosed in Japanese Unexamined Patent Publication No. 10-182,155, is subjected to a severe durability test, the following have been found out. Namely, there arises a drawback in that the coating layer is cracked by the thermal contraction of the support, or in that the coating layer comes off.

It is therefore an object of the present invention to further improve the heat resistance of an exhaust-gas-purifying catalyst, in which a noble metal is loaded on a support including a ceria-zirconia solid solution, to make the catalyst exhibit high purifying activity even after a severe durability test, and to inhibit its coating layer from cracking and coming off.

### SUMMARY OF THE INVENTION

In a first aspect of the present invention, a catalyst for purifying an exhaust gas comprises:

a support including a mixture containing a porous oxide and a composite oxide; and
a noble metal loaded on the support; the composite oxide expressed by a general formula (1);

$$(Al_2O_3)_a(CeO_2)_b(ZrO_2)_{1-b}(Y_2O_3)_c \qquad (1)$$

in which "a", "b", and "c" are molar ratios falling in the range of 0.4 ≦ "a" ≦ 2.5, 0.2 ≦ "b" ≦ 0.7, and 0.01≦ "c" ≦

0.2, respectively; and
the support including a particle having a particle diameter of 5 μm or more in an amount of 30% by volume or more.

In a second aspect of the present invention, a catalyst for purifying an exhaust gas comprises:

a support including a mixture containing a porous oxide and a composite oxide; and
a noble metal loaded on the support;

the composite oxide expressed by a general formula (2);

$$(Al_2O_3)_a(CeO_2)_b(Zrd_2)_{1-b}(La_2O_3)_d \quad (2)$$

in which "a", "b", and "d" are molar ratios falling in the range of 0.4 ≦ "a" ≦ 2.5, 0.2 ≦ "b" ≦ 0.7 and 0.005 ≦ "d" ≦ 0.1, respectively; and the support including a particle having a particle diameter of 5 μm or more in an amount of 30% by volume or more.

In a third aspect of the present invention, a catalyst for purifying an exhaust gas comprises:

a support including a mixture containing a porous oxide and a composite oxide; and
a noble metal loaded on the support;

the composite oxide expressed by a general formula (3);

$$(Al_2O_3)_a(CeO_2)_b(ZrO_2)_{1-b}(Y_2O_3)_c(La_2O_3)_d \quad (3)$$

in which the values "a", "b", "c" and "d" are molar ratios falling in the 0.4 ≦"a" ≦ 2.5, 0.2 ≦"b"≦ 0.7, 0.01 ≦"c" ≦ 0.2, and 0.005 ≦"d" ≦ 0.1, respectively; and
the support including a particle having a particle diameter of 5 μm or more in an amount of 30% by volume or more.

In a fourth aspect of the present invention, the $CeO_2$ and the $ZrO_2$, contained in the composite oxide, form a solid solution; and a solubility of the $ZrO_2$ is 50% or more in the composite oxide.

In a fifth aspect of the present invention, a mean crystal grain diameter of the ceria-zirconia solid solution, contained in the composite oxide, is 10 nm or less by an X-ray diffraction measurement before and after heating the support at 1,000 °C for 5 hours or more.

In a sixth aspect of the present invention, a weight ratio of the porous oxide and the composite oxide in the support satisfies the condition 0.25 ≦ the composite oxide/(the porous oxide + the composite oxide) ≦ 0.7.

In a seventh aspect of the present invention, Pd is loaded on the composite oxide; and at least one of Pt and Rh is loaded on the support.

According to the present invention, the coating layer of the present exhaust-gas-purifying catalyst hardly cracks and comes off after a severe durability test. In the coating layer, the ceria-zirconia composite oxide exhibits a high specific surface area, and is kept to be highly dispersed. Thus, the present exhaust-gas-purifying catalyst is good in terms of the durability.

## BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:

Fig. 1 is a microscope photograph for illustrating a cross section of a catalyst, in which a mixture whose particles had a mean particle diameter of 2 μm was used, after a durability test;
Fig. 2 is a microscope photograph for illustrating a cross section of a catalyst, in which a mixture whose particles had a mean particle diameter of 5 μm was used, after a durability test and air was subsequently blown to the catalyst;
Fig. 3 is a microscope photograph for illustrating a cross section of a catalyst, in which a mixture whose particles had a mean particle diameter of 7.7 μm was used, after a durability test and air was subsequently blown to the catalyst; and

Fig. 4 is a microscope photograph for illustrating a cross section of a catalyst, in which a mixture whose particles had a mean particle diameter of 8.8 μm was used, after a durability test and air was subsequently blown to the catalyst.

## DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

In the present invention, a support is used which comprises a mixture including a porous oxide particle and a composite oxide particle expressed by the formulae (1)-(3), and the mixture includes a particle having a particle diameter of 5 μm or more in an amount of 30% by volume or more, preferably 40% by volume or more, and furthermore preferably 50% by volume or more. When the mixture includes the particle having a particle diameter of 5 μm or more in an amount of 30% by volume or more, preferably 40% by volume or more, and furthermore preferably 50% by volume or more, the problems, such as the cracking in the coating layer and the coming-off thereof, are inhibited from happening even after the catalyst is subjected to a severe durability test in which it is heated at 1,000 °C for 20 hours. In the mixture, when the particle having a particle diameter of 5 μm or more is included in an amount of less than 30% by volume, it is believed that the thermal contraction enlarges in the durability test, and that, as set forth in the following examples, the coating layer is cracked or come off. Note that the "particle diameter" means the average particle diameter of the mixtures including porous oxides and composite oxides.

Further, in the composition of the composite oxide, when the value "a" of the formulae (1)-(3) is less than 0.4, it is difficult to highly disperse the ceria-zirconia composite oxide. After the severe durability test, the specific surface area of the resulting ceria-zirconia composite oxide decreases, and thereby the purifying performance degrades. When the value "a" exceeds 2.5, the ceria-zirconia composite oxide decreases quantitatively so that a sufficient oxygen storing capability cannot be secured, and thereby favorable purifying performance cannot be obtained.

When the value "b" of the formulae (1)-(3) is less than 0.2, the amount of the cerium is so less that a sufficient oxygen storing capability cannot be secured, and thereby favorable purifying performance cannot be obtained. When the value "b" exceeds 0.7, the thermal stability of the resulting ceria-zirconia composite oxide decreases, and thereby purifying performance degrades after the severe durability test.

As set forth in the formulae (1) and (3), by further adding $Y_2O_3$ to the composite oxide, the durability of the ceria-zirconia composite oxide is further improved in oxidation atmospheres of 1,000 °C or more. The phase separation of the ceria-zirconia composite oxide is less likely to occur, and the activity of the noble metal is facilitated. When the value "c" of the formulae (1) and (3) is less than 0.01, the advantages resulting from the $Y_2O_3$ addition cannot be obtained. When the value "c" exceeds 0.2, the heat resistance of the ceria-zirconia composite oxide decreases, and the activity of the noble metal degrades.

Furthermore, as set forth in the formulae (2) and (3), by further adding $La_2O_2$ to the composite oxide, the durability of the ceria-zirconia composite oxide is further improved in oxidation atmospheres of 1,000°C or more. The specific surface area of the ceria-zirconia composite oxide is maintained highly even after the severe durability test. When the value "d" of the formulae (2) and (3) is less than 0.005, the advantages resulting from the $La_2O_3$ addition cannot be obtained. When the value "d" exceeds 0.1, the heat resistance of the ceria-zirconia composite oxide decreases. In the formulae (1)-(3), at least one of $Y_2O_3$ and $La_2O_3$ can preferably be solved in the ceria-zirconia composite oxide and alumina.

Moreover, the composite oxides set forth in the formulae (1)-(3) can preferably further include at least one additive element selected from the group consisting of alkali metals, alkaline-earth metals, rare-earth elements and transition metal elements in a trace amount. By including such an additive element, the heat resistance of the ceria-zirconia composite oxide is furthermore improved. The addition amount of the additive element can preferably be 0.05 or less by molar ratio of the oxide with respect to the formulae (1)-(3). For example, when the additive element "M" is added, the formula (1) can be expressed by a formula,

$$(Al_2O_3)_a(CeO_2)_b(ZrO_2)_{1-b}(Y_2O_3)_c(MO)_e,$$

and the value of the molar ratio "e" falls in the range of from 0 to 0.05.

As for the alkali metals, Na, K, Li and Cs are preferred. As for the alkaline-earth metals, Mg, Ca, Sr and Ba are preferred. The rare-earth elements can be at least one member selected from the group consisting of La, Pr, Nd, Pm, Sm, Eu, Gd, Tb, Dy, Ho, Er, Tm, Yb and Lu. As for the transition metal elements, Fe, Cu, Ni, Co and Mn can be exemplified. One of these elements can be used, or two or more of them can be used simultaneously. When two or more of them are used, the additive elements can be added in a summed amount of 0.05 or less by molar ratio.

In the aforementioned composite oxide, at least $CeO_2$ and $ZrO_2$ can preferably form a solid solution, and a solubility of $ZrO_2$ can preferably be 50% or more, further preferably 70% or more, and furthermore preferably 80% or more in the solid solution. With this arrangement, the durability of the ceria-zirconia composite oxide is further improved in oxidation atmospheres of 1,000°C or more. The phase separation of the ceria-zirconia composite oxide is further less likely to occur. The solubility is defined by the following equation:

Solubility (%) = 100 x (Amount of Oxide "B" Solved in Total Amount of Oxide "A")/(Total Amount of Oxide "B")

In this formula, it is supposed that the oxide "B" is uniformly solved into the total amount of the oxide "A".
For example, as for a solid solution of oxides comprising ceria and zirconia, ceria corresponds to the oxide "A", and zirconia corresponds to the oxide "B". The solubility is represented by the following formula (4):

Solubility (%) = 100 x (Amount of Zirconia solved in Total Amount of ceria)/(Total Amount of Zirconia) (4)

As for the solid solution of oxides comprising ceria and zirconia (Solubility being 100%), the relationship between a concentration of zirconia "x" (mol%) and a lattice constant "a" (Angstrom) is represented by the following formula (5):

$$x = (5.411 - \text{"a"}) / 0.00253 \quad (5)$$

(Values Cited from JCPDS (Joint Committee on Powder Diffraction Standards)) card.
In the composite oxide particle of the present invention, the average diameter of crystallite in the particle is not more than 10 nm. Such size of the crystallite is calculated by the formula of Sherrer based on a full width at half maximum of an X-ray diffraction peak as follows:

$$D = k\lambda/(\beta\cos\theta)$$

wherein k: a constant 0.9, $\lambda$: an X-ray wave length (Å), $\beta$ : a diffraction ray width of a sample - a diffraction ray width of a standard sample (radian), and $\theta$: a diffraction angle (degree).
When the average diameter of the crystallite is not more than 10 nm, the crystallite is not dense filling, and the particle has pores between crystallites. When the average diameter of the crystallite is more than 10 nm, a pore volume and a specific surface area are decreased, and the heat resistance is deteriorated. It is preferable that the specific surface area is not less than 10 $m^2$/g, more preferably, not less than 20 $m^2$/g, most preferably, not less than 50 $m^2$/g.
In the particle of the present invention, as for the solid solution comprising ceria and zirconia, zirconium is substituted for a part of cerium while maintaining a fluorite structure of a cerium (IV) oxide to form a solid solution. In the solid solution, zirconium is fully solved, and a skeleton of zirconium is formed. As a result, a cubic structure of a crystallite is stable, and the cubic structure can be maintained even if a large amount of oxygen is discharged. Although such a mechanism is not clearly known, it is supposed that oxygen moves easily in the cubic structure so that it shows excellent oxygen storage ability as compared with a tetragonal structure or a monoclinic structure.
Since the average diameter of crystallite is not more than 10 nm, a grain boundary between crystallites enlarges, and an oxygen ion moves easily in the grain boundary. So, the oxygen adsorption and discharge rate is very high, and the oxygen storage ability is further improved. Since an oxygen adsorption and discharge is performed on the surface, when the specific surface area is large, namely, not less than 10 $m^2$/g, the oxygen adsorption and discharge rate is very high, and the oxygen storage capability is excellent.
As for the solid solution comprising ceria and zirconia, it is preferable that the ratio of the number of cerium atoms to the number of zirconium atoms in the particle is $0.3 \leqq Zr/(Ce + Zr) \leqq 0.8$, more preferably, $0.4 \leqq Zr/(Ce + Zr) \leqq 0.6$. When the content of zirconia is not more than 30 mol%, an action for forming a skeleton of zirconium in the crystallite of the solid solution is weakened. So, it is difficult to . maintain a cubic fluorite structure if oxygen were released to some degree. As a result, oxygen cannot be released, and the oxygen storage capability is degraded. Furthermore, the oxygen storage ability depends on a change in number of valent of cerium (III) and cerium (IV). So, when the content of zirconium is not less than 80 mol%, an absolute amount of cerium is insufficient, and the oxygen storage capability is degraded.
A weight ratio of the porous oxide and the composite oxide can preferably be $0.25 \leqq$ composite oxide/(com-

posite oxide + porous oxide) ≦ 0.7, and can be especially preferred to fall in a range of from 0.4 or more to 0.6 or less. When the value of {composite oxide/(composite oxide + porous oxide)} is less than 0.25, the ceria-zirconia composite oxide decreases quantitatively so that a sufficient oxygen storage-and-release ability cannot be secured, and thereby favorable purifying performance cannot be obtained. When the value of {composite oxide/(composite oxide + porous oxide)} exceeds 0.7, the loadability of the noble metal decreases and the noble metal is mainly loaded on the porous oxide. As a result, the co-catalytic actions, which are represented by the oxygen storage-and-release ability of the ceria-zirconia composite oxide, do not work effectively.

With the thus arranged support, after the support is burned at 1,000 °C for 5 hours, the mean crystal grain diameter in the composite oxide is 10 nm or less by an X-ray diffraction measurement. Even after the severe durability test, the specific surface area of the ceria-zirconia composite oxide can be maintained highly, and thereby the present catalyst can maintain the high purifying performance.

As for the porous oxide constituting a part of the support, it is possible to use the porous oxides, such as alumina, zeolite, mordenite, FSM, alumina-zirconia composite oxide, silica, zirconia, titania and silica-alumina, which are used as the supports of the conventional exhaust-gas-purifying catalysts. The particle diameter of this porous oxide is not limited particularly. However, the porous oxide can be optimum which exhibits a specific surface area falling in a range of from 5 to 300 $m^2$/g. When the specific surface area falls outside this range, the loading ratio of the noble metal might deviate, and the activity might degrade. In addition, it might be further impossible to highly disperse the composite oxide particle.

As for the noble metal, it is possible to use the noble metals, such as Pt, Rh, Pd and Ir, which are used in the conventional exhaust-gas-purifying catalysts. The loading amount of the noble metal depends on the specific noble metals, however, it is preferable to load the noble metal in an amount of from 0.1 to 20% by weight with respect to the support. When the loading amount is less than the lower limit, no sufficient purifying activity can be obtained. When the loading amount is more than the upper limit, the purifying activity saturates, and the cost goes up.

In order to manufacture the composite oxide according to the present invention, it is possible to utilize a manufacturing process which is disclosed in Japanese Unexamined Patent Publication No. 10-182,155, for example. Namely, an oxide precursor is prepared from at least one of salt solutions of Al, Ce and Zr by a coprecipitation process in a short period of time, and it is burned in air. Thus, the composite oxide can be produced. In addition, Al, Ce and Zr can be supplied as an alkoxide to produce the oxide precursor by a sol-gel process.

When producing the present exhaust-gas-purifying catalyst, the particle of the aforementioned composite oxide and the particle of the porous oxide are mixed to make a mixture. Then, the mixture is mixed with a binder, such as an alumina sol, boehmite and aluminum nitrate, and water to make a slurry. By using the slurry, a coating layer is formed by wash-coating a honeycomb-shaped support substrate, which is formed of a metal foil or cordierite, and is dried and burned. Thereafter, by using a solution of a noble metal salt or a noble metal complex, a noble metal is loaded by adsorption. Thus, the present exhaust-gas-purifying catalyst can be produced. As for the binder, a silica sol, a zirconia sol or a titania sol can be used, or a salt solution of these metallic elements can be used.

Alternatively, a solution of a noble metal salt can be impregnated into the mixture of the composite oxide particle and the porous oxide particle to make a particle with a noble metal loaded. The resulting mixture then may be filtered and dried, or may be evaporated and dried. The particle thus loaded with a noble metal can be coated on a support substrate. Alternatively, in the preparation of an oxide precursor of the composite oxide, a noble metal salt can be coexisted with the solution of the oxide precursor to load a noble metal on the composite oxide, and the resulting product can be mixed with the porous oxide particle to make a particle with a noble metal loaded.

Hereinafter, the present invention will be described specifically with reference to examples and comparative examples.

<u>Example No. 1</u>

A high concentration aqueous solution was prepared in which aluminum nitrate, cerium nitrate, zirconium oxynitrate and lanthanum nitrate were solved by ratios of "a"=0.5, "b"=0.5 and "d"=0.007 in the formula (2). Into the solution, an aqueous hydrogen peroxide solution was added and stirred to mix. The aqueous hydrogen peroxide solution included hydrogen peroxide in an amount equivalent to 1.2 times of cerium. Thereafter, ammonia water was added in a short period of time to neutralize the resulting mixture. Thus, a suspension was prepared which contained precipitates of cerium hydroxide, zirconium hydroxide, lanthanum hydroxide and aluminum hydroxide. The suspension was filtered and washed. Thereafter, the resulting precipitates were calcined at 300 °C for 5 hours, and were further burned at 700 °C for 5 hour. The resulting particle was charged into a ball mill together with water, and was pulverized so that 50% by volume or more of its particles had a particle diameter of 15 μm, thereby preparing a composite oxide particle. Note that the pulverized particle was burned at 700 °C herein, but can be burned at a temperature around 600 to 1,100 °C at which an oxide is formed.

Then, with respect to 100 parts by weight of the aforementioned composite oxide particle, 100 parts by weight of a commercially available heat-resistant activated alumina particle (specific surface area: 180 $m^2/g$), 20 parts by weight of aluminum nitrate nona-hydrate, 5 parts by weight of boehmite (AlO(OH)), and water were added. The water was added in such an amount that the solid content was 50% by weight after the burning. The mixture was mixed by an attrition mill for about 3 minutes, thereby preparing a slurry.

A honeycomb-shaped support substrate, which was made from cordierite and had a volume of 1.3 L, was prepared, and was immersed into the slurry. Thereafter, the support substrate was taken out of the slurry, and was blown to remove the excessive slurry. After drying, the support substrate was burned at 650 °C for 1 hour, thereby preparing a coating layer. Note that the coating layer was formed in an amount of 200 g with respect to 1 L of the support substrate.

The support substrate having the coating layer was immersed into a platinum nitrate aqueous solution having a predetermined concentration, was blown to remove the excessive water droplets, and was dried. Thereafter, the support substrate was burned at 250 °C for 1 hour to load Pt. Subsequently, the support substrate was immersed into a rhodium nitrate aqueous solution having a predetermined concentration, and was loaded with Rh in the same manner. The loading amounts were 1.5 g for Pt and 0.3 g for Rh with respect to 1 L of the support substrate.

The resulting exhaust-gas-purifying catalyst of Example No. 1 was mounted on an exhaust pipe of a gasoline engine having a displacement of 2 L. Then, it was subjected to a facilitated durability driving test, in which the gasoline engine was run in a driving pattern simulating the European driving, for 100 hour. The maximum catalyst-bed temperature was about 1,000 °C during the test.

Thereafter, an exhaust gas was flowed through the exhaust-gas-purifying catalyst of Example No. 1. The exhaust gas simulates an exhaust gas, which is emitted during the simulated European driving. The exhaust gas was examined for the contents of HC, CO and $NO_x$ at the upstream side of the catalyst and the downstream side thereof simultaneously, and the average conversion of HC, CO and $NO_x$ was calculated. The result is set forth in Table 1.

Example No. 2

Except that the activated alumina particle working as the porous oxide was replaced by the same amount of a zirconia particle having a specific surface area of 50 $m^2/g$, and that the aluminum nitrate and boehmite were replaced by 100 parts by weight of a zirconia sol ($ZrO_2$ content: 10% by weight), an exhaust-gas-purifying catalyst of Example No. 2 was prepared in the same manner as Example No. 1. The average conversion was measured in the same manner as Example No. 1. The result is set forth in Table 1.

Example No. 3

Except that a high-concentration aqueous solution was used in which aluminum nitrate, cerium nitrate and zirconium oxynitrate were solved by ratios of "a"=0.5 and "b"=0.33 in the formula (2), an exhaust-gas-purifying catalyst of Example No. 3 was prepared in the same manner as Example No. 1. The average conversion was measured in the same manner as Example No. 1. The result is set forth in Table 1.

Example No. 4

Except that a high-concentration aqueous solution was used in which aluminum nitrate, cerium nitrate, zirconium oxynitrate and yttrium nitrate were solved by ratios of "a"=0.5, "b"=0.6 and "c"=0.05 in the formula (1), an exhaust-gas-purifying catalyst of Example No. 4 was prepared in the same manner as Example No. 1. The average conversion was measured in the same manner as Example No. 1. The result is set forth in Table 1.

Example No. 5

Except that a high-concentration aqueous solution was used in which aluminum nitrate, cerium nitrate, zirconium nitrate, yttrium nitrate and lanthanum nitrate were solved by ratios of "a"=0.5, "b"=0.5, "c"=0.05 and "d"=0.015 in the formula (3), an exhaust-gas-purifying catalyst of Example No. 5 was prepared in the same manner as Example No. 1. The average conversion was measured in the same manner as Example No. 1. The result is set forth in Table 1.

Example No. 6

A composite oxide particle was prepared in the same manner as Example No. 1. Into the composite oxide particle, a palladium nitrate aqueous solution having a predetermined concentration was impregnated in a predetermined amount. The composite oxide particle was filtered, dried and burned at 250 °C to load Pd. With respect to 100 parts by weight of the resulting composite oxide particle with Pd loaded, 100 parts by weight of an activated alumina particle, working as the porous oxide particle and being the same as that of Example No. 1, 20 parts by weight of aluminum nitrate nona-hydrate, and 5 parts by weight of boehmite were added, and were mixed by an attrition mill for about 3 minutes, thereby preparing a slurry.

By using the resulting slurry, a coating layer was formed on a support substrate in the same manner as Example No. 1. Subsequently, the support substrate was immersed into a rhodium nitrate aqueous solution having a predetermined concentration, and was taken up therefrom. Then, the support substrate was blown to remove the excessive water droplets, and was dried. Finally, the support substrate was loaded with Rh. Thus, an exhaust-gas-purifying catalyst of Example No. 6 was prepared. The loading amounts were 1.5 g for Pd and 0.3 g for Rh with respect to 1 L of the support substrate. The average conversion was measured in the same manner as Example No. 1. The result is set forth in Table 1.

Example No. 7

A high-concentration aqueous solution was prepared in which aluminum nitrate, cerium nitrate, zirconium nitrate and lanthanum nitrate were solved by ratios of "a"=0.5, "b"=0.5 and "d"=0.015 in the formula (2). Except that precipitates were coprecipitated by using the high-concentration aqueous solution, and that mordenite was mixed, an exhaust-gas-purifying catalyst of Example No. 7 was prepared in the same manner as Example No. 6. The loading amounts were 1.5 g for Pd and 0.3 g for Rh with respect to 1 L of the support substrate. The average conversion was measured in the same manner as Example No. 1. The result is set forth in Table 1.

Example No. 8

A high-concentration aqueous solution was prepared in which aluminum nitrate, cerium nitrate, zirconium nitrate and lanthanum nitrate were solved by ratios of "a"=0.5, "b"=0.5 and "d"=0.015 in the formula (2), and in which palladium nitrate was further solved. Except that precipitates were coprecipitated by using the high-concentration aqueous solution, a composite oxide particle loaded with Pd was prepared in the same manner as Example No. 1.

With respect to 100 parts by weight of the composite oxide particle loaded with Pd, 100 parts by weight of an activated alumina particle, working as the porous oxide particle and being the same as that of Example No. 1, 20 parts by weight of aluminum nitrate nona-hydrate, and 5 parts by weight of boehmite were added, and were mixed by an attrition mill for about 3 minutes, thereby preparing a slurry.

By using the resulting slurry, a coating layer was formed on a support substrate in the same manner as Example No. 1. Subsequently, the support substrate was loaded with Pt and Rh. Thus, an exhaust-gas-purifying catalyst of Example No. 8 was prepared. The loading amounts were 1.5 g for Pd, 1.5 g for Pt and 0.3 g for Rh with respect to 1 L of the support substrate. The average conversion was measured in the same manner as Example No. 1. The result is set forth in Table 1.

Example No. 9

A high-concentration aqueous solution was prepared in which aluminum nitrate, cerium nitrate, zirconium nitrate and lanthanum nitrate were solved by ratios of "a" =0.5, "b"=0.5 and "d"=0.015 in the formula (2), and in which palladium nitrate was further solved. Except that precipitates were coprecipitated by using the high-concentration aqueous solution, a composite oxide particle loaded with Pd was prepared in the same manner as Example No. 6.

With respect to 100 parts by weight of the composite oxide particle loaded with Pd, 50 parts by weight of an activated alumina particle, being the same as that of Example No. 1, 50 parts by weight of an alumina-zirconia composite oxide particle, working as the porous oxide particle and having a specific surface area of 70 $m^2/g$, 20 parts by weight of aluminum nitrate nona-hydrate, and 5 parts by weight of boehmite were added, and were mixed by an attrition mill for about 3 minutes, thereby preparing a slurry.

By using the resulting slurry, a coating layer was formed on a support substrate in the same manner as Example No. 1. Subsequently, the support substrate was loaded with Pt and Rh. Thus, an exhaust-gas-purifying catalyst of Example No. 9 was prepared. The loading amounts were 1.5 g for Pd, 1.5 g for Pt and 0.3 g for Rh with respect to 1 L of the support substrate. The average conversion was measured in the same manner as Example No. 1. The result is set forth in Table 1.

Comparative Example Nos. 1 through 5

Except that a high-concentration aqueous solution was used in which aluminum nitrate, cerium nitrate and zirconium nitrate were solved by ratios of "a"=2.6, "b"=0.5 and "d"=0 in the formula (2), an exhaust-gas-purifying catalyst of Comparative Example No. 1 was prepared in the same manner as Example No. 1. The average conversion was measured in the same manner as Example No. 1. The result is set forth in Table 1.

In Table 1, exhaust-gas-purifying catalysts of Comparative Example Nos. 2 through 5 are listed which were prepared in the same manner as those of Example Nos. 1 through 3 except that the values "a" through "d" fell outside the claimed ranges of the present invention.

TABLE 1

| | Composition of Composite Oxide | | | | | Porous Oxide | Noble Metal Loading Amount after Forming Coating Layer & (Loading Method) | Binder | Average Conversion (%) | Noble Metal Loading Amount to Composite Oxide Particle & (Loading Method) |
|---|---|---|---|---|---|---|---|---|---|---|
| | $Al_2O_3$ "a" | $CeO_2$ "b" | $ZrO_2$ "1-b" | $Y_2O_3$ "c" | $La_2O_3$ "d" | | | | | |
| Ex. No. 1 | 0.5 | 0.5 | 0.5 | None | 0.007 | $Al_2O_3$ | Pt: 1.5 g/L (Adsorption) Rh: 0.3 g/L (Adsorption) | Aluminum Nitrate & Boehmite | 98 | None |
| Ex. No. 2 | 0.5 | 0.5 | 0.5 | None | 0.007 | $ZrO_2$ | Pt: 1.5 g/L (Adsorption) Rh: 0.3 g/L (Adsorption) | Zirconia Sol | 95 | None |
| Ex. No. 3 | 0.5 | 0.33 | 0.66 | None | 0.007 | $Al_2O_3$ | Pt: 1.5 g/L (Adsorption) Rh: 0.3 g/L (Adsorption) | Aluminum Nitrate & Boehmite | 97 | None |
| Ex. No. 4 | 0.5 | 0.6 | 0.4 | 0.05 | None | $Al_2O_3$ | Pt: 1.5 g/L (Adsorption) Rh: 0.3 g/L (Adsorption) | Aluminum Nitrate & Boehmite | 96 | None |
| Ex. No. 5 | 0.5 | 0.5 | 0.5 | 0.05 | 0.015 | $Al_2O_3$ | Pt: 1.5 g/L (Adsorption) Rh: 0.3 g/L (Adsorption) | Aluminum Nitrate & Boehmite | 95 | None |
| Ex. No. 6 | 0.5 | 0.5 | 0.5 | None | 0.007 | $Al_2O_3$ | Rh: 0.3 g/L (Adsorption) | Aluminum Nitrate & Boehmite | 99 | Pd: 1.5 g/L (Impregnation) |
| Ex. No. 7 | 0.5 | 0.5 | 0.5 | None | 0.015 | Mordenite | Rh: 0.3 g/L (Adsorption) | Aluminum Nitrate & Boehmite | 99 | Pd: 1.5 g/L (Coprecipitation) |
| Ex. No. 8 | 0.5 | 0.5 | 0.5 | None | 0.015 | $Al_2O_3$ | Pt: 1.5 g/L (Adsorption) Rh: 0.3 g/L (Adsorption) | Aluminum Nitrate & Boehmite | 99 | Pd: 1.5g/L (Coprecipitation) |

TABLE 1 (bis)

| | Composition of Composite Oxide | | | | | Porous Oxide | Noble Metal Loading Amount after Forming Coating Layer & (Loading Method) | Binder | Average Conversion (%) | Noble Metal Loading Amount to Composite Oxide Particle & (Loading Method) |
|---|---|---|---|---|---|---|---|---|---|---|
| | $Al_2O_3$ "a" | $CeO_2$ "b" | $ZrO_2$ "1-b" | $Y_2O_3$ "c" | $La_2O_3$ "d" | | | | | |
| Ex. No. 9 | 0.5 | 0.5 | 0.5 | None | 0.015 | $Al_2O_3$ & $Al_2O_3$-$ZrO_2$ | Pt: 1.5 g/L (Adsorption) Rh: 0.3 g/L (Adsorption) | Aluminum Nitrate & Boehmite | 99 | Pd: 1.5g/L (Coprecipitation) |
| Comp. Ex. No. 1 | 2.6 | 0.5 | 0.5 | None | None | $Al_2O_3$ | Pt: 1.5 g/L (Adsorption) Rh: 0.3 g/L (Adsorption) | Aluminum Nitrate & Boehmite | 86 | None |
| Comp. Ex. No. 2 | 0.3 | 0.5 | 0.5 | None | None | $Al_2O_3$ | Pt: 1.5 g/L (Adsorption) Rh: 0.3 g/L (Adsorption) | Aluminum Nitrate & Boehmite | 90 | None |
| Comp. Ex. No. 3 | 0.5 | 0.15 | 0.85 | None | None | $Al_2O_3$ | Pt: 1.5 g/L (Adsorption) Rh: 0.3 g/L (Adsorption) | Aluminum Nitrate & Boehmite | 88 | None |
| Comp. Ex. No. 4 | 0.5 | 0.5 | 0.5 | 0.21 | None | $Al_2O_3$ | Pt: 1.5 g/L (Adsorption) Rh: 0.3 g/L (Adsorption) | Aluminum Nitrate & Boehmite | 85 | None |
| Comp. Ex. No. 5 | 0.5 | 0.5 | 0.5 | None | 0.12 | $Al_2O_3$ | Pt: 1.5 g/L (Adsorption) Rh: 0.3 g/L (Adsorption) | Aluminum Nitrate & Boehmite | 83 | None |

Example Nos. 10 through 27 and Comparative Example Nos. 6 through 11

Except that the compositions differed from that of Example No. 1, the following 24 particles set forth in Table 2 below were prepared in the same manner as Example No. 1. The resulting particles were heated under the conditions recited in Table 2, e.g., in the range of from 950 to 1,100 °C. Table 2 summarizes the solubility of $ZrO_2$ in the solid solution of the ceria-zirconia in each of the samples, the mean crystallite particle diameter of the ceria-zirconia solid solution contained in each of the samples, and the specific surface area of the alumina-ceria-zirconia composite oxide. Note that Example No. 23 was synthesized by two processes, e.g., the process of Example No. 1 and an ordinary sol-gel process and was examined for the characteristics. Regardless of the synthesis processes, Example No. 23 exhibited the substantially same results as those of the other Examples.

The catalysts or particles of Example Nos. 10 through 27 whose compositions were fell in the claimed ranges of the present invention make it simultaneously possible to enlarge the solubility of $ZrO_2$, to enlarge the specific surface area, and to reduce the mean crystallite particle diameter.

With regard to the catalysts or particles of Comparative Example Nos. 6 through 11, the solubility of $ZrO_2$ was insufficient after being heated at the high temperatures as shown in Comparative Example No. 6. The mean crystallite particle diameter of the ceria-zirconia solid solution was enlarged, and the specific surface area was decreased as shown in Comparative Example Nos. 7 through 10. In particular, in case of Comparative Example No. 11 whose alumina content was large, since the ceria content was reduced relatively in the catalyst, the oxygen storage capability was exhibited less. As a result, high catalytic performance could not be obtained in the fluctuating oxidation-reduction atmospheres.

In Table 2, some of the values exceed 100 in the solubility. This results from the fact that the solubility was obtained simply by the aforementioned equation (5) based on the 311 diffraction peak of the ceria-zirconia solid solution (cubic crystalline structure). Namely, since Y and La solve in both of the alumina solid solution and the ceria-zirconia solid solution, the lattice constant of the ceria-zirconia solid solution is varied by the difference of the ion radii of Y and La accordingly. However, since the influence was 10% or less, the solubilities were calculated while neglecting the influence for simplicity.

TABLE 2

| | Composition of Composite Oxide | | | | | Solubility of $ZrO_2$ in $(Ce, Zr)O_2$ Solid Solution (%) | | Mean Particle Dia. of $(Ce, Zr)O_2$ Solid Solution (nm) | | Specific Surface Area of Alumina-Ceria-Zirconia Composite Oxide | | |
|---|---|---|---|---|---|---|---|---|---|---|---|---|
| | $Al_2O_3$ "a" | $CeO_2$ "b" | $ZrO_2$ "1-b" | $Y_2O_3$ "c" | $La_2O_3$ "d" | 1,000 ℃, 20 hr. | 1,100℃, 20 hr. | 1,000 ℃, 20 hr. | 1,100℃, 20 hr. | 950 ℃, 5 hr. | 1,000 ℃, 20 hr. | 1,100℃, 20 hr. |
| Ex. No. 10 | 0.5 | 0.5 | 0.5 | 0.015 | None | 94 | 64 | 4.9 | 8.5 | 39 | 27 | 13 |
| Ex. No. 11 | 0.5 | 0.5 | 0.5 | 0.05 | None | 108 | 108 | 7.6 | 8.5 | 39 | 26 | 12 |
| Ex. No. 12 | 0.5 | 0.5 | 0.5 | 0.15 | None | 108 | 108 | 9.8 | 14.0 | 38 | 24 | 12 |
| Ex. No. 13 | 0.5 | 0.5 | 0.5 | None | 0.005 | 70 | 54 | 6.1 | 10.0 | 40 | 25 | 12 |
| Ex. No. 14 | 0.5 | 0.5 | 0.5 | None | 0.015 | 86 | 64 | 5.5 | 10.0 | 41 | 25 | 11 |
| Ex. No. 15 | 0.5 | 0.5 | 0.5 | None | 0.025 | 86 | 73 | 6.4 | 10.0 | 42 | 26 | 11 |
| Ex. No. 16 | 0.5 | 0.5 | 0.5 | 0.015 | 0.005 | 97 | 72 | 5.8 | 8.5 | 40 | 28 | 14 |
| Ex. No. 17 | 0.5 | 0.5 | 0.5 | 0.015 | 0.015 | 94 | 92 | 5.9 | 7.8 | 40 | 24 | 12 |
| Ex. No. 18 | 0.5 | 0.5 | 0.5 | 0.015 | 0.025 | 94 | 86 | 6.6 | 11.0 | 45 | 26 | 11 |
| Ex. No. 19 | 0.5 | 0.5 | 0.5 | 0.05 | 0.005 | 110 | 108 | 8.1 | 8.8 | 40 | 27 | 14 |
| Ex. No. 20 | 0.5 | 0.5 | 0.5 | 0.05 | 0.015 | 102 | 106 | 8.0 | 11.0 | 43 | 28 | 14 |
| Ex. No. 21 | 0.5 | 0.5 | 0.5 | 0.05 | 0.025 | 102 | 100 | 7.8 | 10.7 | 47 | 26 | 14 |

TABLE 2 (bis)

| | Composition of Composite Oxide | | | | | Solubility of $ZrO_2$ in $(Ce, Zr)O_2$ Solid Solution (%) | | Mean Particle Dia. of $(Ce, Zr)O_2$ Solid Solution (nm) | | Specific Surface Area of Alumina-Ceria-Zirconia Composite Oxide | | |
|---|---|---|---|---|---|---|---|---|---|---|---|---|
| | $Al_2O_3$ "a" | $CeO_2$ "b" | $ZrO_2$ "1-b" | $Y_2O_3$ "c" | $La_2O_3$ "d" | 1,000 ℃, 20 hr. | 1,100℃, 20 hr. | 1,000 ℃, 20 hr. | 1,100℃, 20 hr. | 950 ℃, 5 hr. | 1,000 ℃, 20 hr. | 1,100℃, 20 hr. |
| Ex. No. 22 | 0.5 | 0.5 | 0.5 | 0.15 | 0.015 | 105 | 100 | 7.8 | 14.7 | 41 | 22 | 12 |
| Ex. No. 23 | 1.0 | 0.5 | 0.5 | None | 0.005 | 67 | 52 | 5.3 | 9.0 | 62 | 42 | 20 |
| Ex. No. 24 | 2.0 | 0.5 | 0.5 | 0.015 | 0.005 | 96 | 70 | 5.7 | 8.2 | 85 | 55 | 27 |
| Ex. No. 25 | 1.0 | 0.5 | 0.5 | 0.05 | None | 106 | 104 | 5.5 | 8.0 | 60 | 40 | 19 |
| Ex. No. 26 | 1.5 | 0.5 | 0.5 | 0.15 | None | 107 | 107 | 8.2 | 12.0 | 61 | 41 | 20 |
| Ex. No. 27 | 2.5 | 0.5 | 0.5 | 0.05 | None | 103 | 104 | 5.5 | 8.0 | 92 | 60 | 31 |
| Comp. Ex. No. 6 | 0.5 | 0.5 | 0.5 | None | None | 63 | 45 | 6.4 | 11.0 | 39 | 26 | 11 |
| Comp. Ex. No. 7 | 0.5 | 0.5 | 0.5 | 0.25 | None | 102 | 100 | 9.8 | 16.5 | 36 | 23 | 6 |
| Comp. Ex. No. 8 | 0.5 | 0.5 | 0.5 | 0.25 | 0.015 | 100 | 97 | 10.2 | 17.6 | 34 | 19 | 7 |
| Comp. Ex. No. 9 | None | 0.5 | 0.5 | 0.015 | None | 96 | 66 | 13.0 | 21.5 | 2 | 1 | 0 |
| Comp. Ex. No. 10 | 0.3 | 0.5 | 0.5 | 0.015 | None | 96 | 66 | 10.1 | 18.0 | 21 | 13 | 8 |
| Comp. Ex. No. 11 | 3.0 | 0.5 | 0.5 | 0.015 | None | 94 | 70 | 8.0 | 11.0 | 103 | 65 | 34 |

<Evaluation>

It is apparent from Table 1 that the exhaust-gas-purifying catalysts of the Examples exhibited remarkably high average conversions of from 95 to 99% even after the severe durability test, which was carried out at 1,000 °C for 100 hours, and were extremely superior to the catalysts of Comparative Example Nos. 1 through 5 in terms of the durability.

According to the results of the X-ray diffraction, the cerium and zirconium formed solid solutions, which were substantially homogeneous, in the catalysts of the Examples. The primary particle diameters were about 7 nm. The solubilities of $ZrO_2$ were 85% or more.

The cross sections of the coating layers were grounded, and were observed with an electron microscope. As a result, the following were confirmed: the solid solutions of the cerium and zirconium were distributed in the alumina in a highly dispersed manner; and the composite oxide particles were dispersed so that they were surrounded by the alumina particle or the alumina-zirconia particle.

The coating layers were scraped off, and the specific surface areas of the resulting particles were measured. As a result, they exhibited remarkably high specific surface areas. For instance, the catalyst of Example No. 2 exhibited a specific surface area of about 18 $m^2$/g, and the other Example No. 1 and Example Nos. 3 through 9 exhibited specific surface areas of 70 $m^2$/g or more. The oxygen storage-and-release abilities of the particles were measured. As a result, the following were confirmed: they exhibited such high values that the oxygen storage-and-release abilities were 0.09 mol per 1 mol of cerium at 300 °C.

According to the above-described results, the exhaust-gas-purifying catalysts of the Examples could maintain the high purifying performance even after the durability test because of the following operations: the ceria-zirconia solid solutions were highly dispersed, and the specific surface areas were large. Accordingly, the catalysts exhibited the high oxygen storage-and-release abilities. It is believed that the advantages resulted from the arrangement that the values of the molar ratios "a" through "d" of the composite oxide fell in the claimed ranges of the present invention.

<Influence of Particle Diameter>

Then, the influence of the particle diameter of the mixture was surveyed.

Except that the time for pulverizing and mixing by the attrition mill was changed, 4 mixtures whose mean particle diameters of the particles were 2 µm, 5 µm, 7.7 µm and 8.8 µm were prepared in the same manner as Example No. 1. By using each of the mixtures, 4 exhaust-gas-purifying catalysts were prepared in the same manner as Example No. 1.

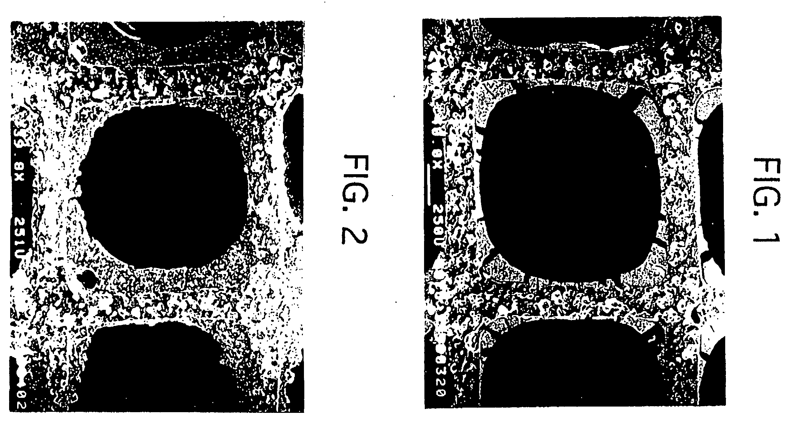

These exhaust-gas-purifying catalysts were mounted on the exhaust pipe in the same manner as Example No. 1, and were subjected to the facilitated durability driving test for 10 hours similarly. Thereafter, the cross sections of the catalysts were observed with an electron microscope. As a result, in the catalyst, which used the mixture whose particles had a mean particle diameter of 2 µm, large cracks were observed in the coating layer as shown in Fig. 1. The coating layer came off in places.

Then, air was blown to the end surfaces of the catalysts at a pressure of 0.1 MPa. The cross sections of the catalysts were observed with an electron microscope. As a result, in the catalyst, which used the mixture whose particles had a mean particle diameter of µm, cracks were observed partially as shown in Fig. 2. The coating layer came off in places very limitedly.

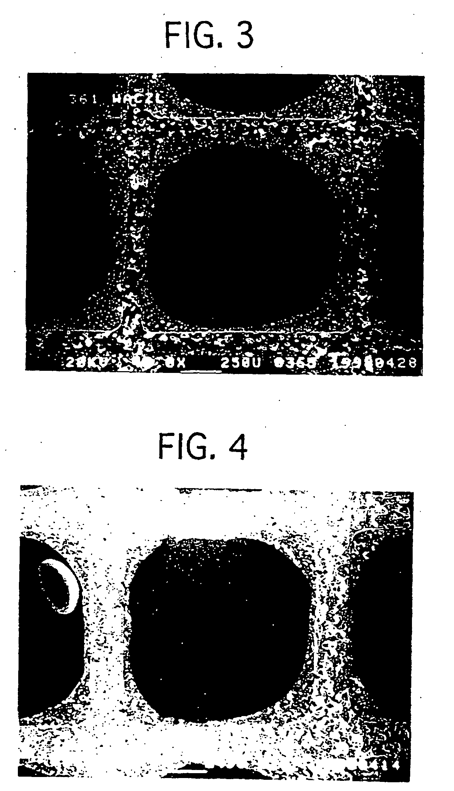

Moreover, in the catalysts, which used the mixtures whose particles had mean particle diameters of 7.7 µm and 8.8 µm, no cracks and coming-off were observed in the coating layers, as shown in Figs. 3 and 4, after the catalysts were vibrated and were blown by the air. The catalysts were good in terms of the strength of the coating layers.

These 4 mixtures and the other 4 mixtures were examined for the particle diameter, distribution by using a laser diffraction/scattering type particle diameter distribution measuring apparatus, and for the extent of cracks and coming-off. Results are set forth in Table 3 below. According to the results, it is understood that the cracks and coming-off were less likely to occur when the particles having a particle diameter of 5 µm or more were contained in the mixture in an amount of 30% by volume or more. It is further preferable to contain the particles having a particle diameter of 5 µm or more in an amount of 40% by volume or more, furthermore preferably in an amount of 50% by volume or more. However, it is not the case that the larger the particle diameter was, the better performance the mixtures exhibited. For instance, when the particles having a particle diameter of 5 µm or more were contained in an amount of 85% or more, there arose a problem in that the coming-off were more likely to occur adversely.

TABLE 3

| Mean Particle Dia. (µm) | 2.0 | 3.2 | 4.0 | 5.0 | 7.7 | 8.8 | 12.0 | 14.8 |
|---|---|---|---|---|---|---|---|---|
| Particle Dia. (µm) | | | | | | | | |
| 30 µm or more | 0.0 | 0.0 | 0.0 | 0.0 | 0.5 | 0.8 | 1.0 | 11.7 |
| 20 µm or more | 0.0 | 0.0 | 0.1 | 0.1 | 4.5 | 10.2 | 16.7 | 32.3 |
| 10 µm or more | 0.0 | 2.5 | 4.2 | 8.5 | 32.7 | 45.8 | 60.1 | 68.0 |
| 5 µm or more | 4.9 | 27.2 | 34.3 | 50.0 | 75.9 | 80.0 | 82.7 | 85.5 |
| 3 µm or more | 26.7 | 52.9 | 65.5 | 76.5 | 92.4 | 91.8 | 90.9 | 93.0 |
| 2 µm or more | 50.0 | 65.3 | 78.6 | 90.8 | 99.4 | 98.3 | 94.5 | 96.6 |
| 1 µm or more | 80.2 | 84.3 | 90.4 | 99.5 | 100.0 | 99.5 | 98.1 | 99.6 |
| Extent of Coming-Off and Cracks | Large | Large | Less | Least | None | None | Least | Medium |

## Claims

1. A catalyst for purifying exhaust gas, comprising

- a support including a mixture containing a porous oxide and a composite oxide; and
- a noble metal loaded on the support;
- the composite oxide being expressed by the general formula (1):

$$(Al_2O_3)_a\ (CeO_2)_b\ (ZrO_2)_{1-b}\ (Y_2O_3)_c \qquad (1)$$

wherein the values of "a", "b" and "c" are molar ratios falling within a range of
$0.4 \leq a \leq 2.5$;
$0.2 \leq b \leq 0.7$; and
$0.01 \leq c \leq 0.2$, respectively;
and

- the support including particles having a particle diameter of 5 μm or more in an amount of 30 % by volume or more; and
- wherein the particle diameter means the average particle diameter of the mixtures including the porous oxides and composite oxides.

**2.** The catalyst according to claim 1, wherein said support includes particles having a particle diameter of 5 μm or more in an amount of 40 % by volume or more, preferably in an amount of 50 % by volume or more.

**3.** A catalyst for purifying exhaust gas, comprising

- a support including a mixture containing a porous oxide and a composite oxide; and
- a noble metal loaded on the support;
- the composite oxide being expressed by the general formula (2):

$$(Al_2O_3)_a\ (CeO_2)_b\ (ZrO_2)_{1-b}\ (La_2O_3)_d \quad (2)$$

wherein the values of "a", "b" and "d" are molar ratios falling within a range of
$0.4 \leq a \leq 2.5$;
$0.2 \leq b \leq 0.7$; and
$0.005 \leq d \leq 0.1$, respectively;
and

- the support including particles having a particle diameter of 5 μm or more in an amount of 30% by volume or more; and
- wherein the particle diameter means the average particle diameter of the mixtures including the porous oxides and composite oxides.

**4.** The catalyst according to claim 3, wherein said support includes particles having a particle diameter of 5 μm or more in an amount of 40 % by volume or more, preferably in an amount of 50 % by volume or more.

**5.** A catalyst for purifying exhaust gas, comprising

- a support including a mixture containing a porous oxide and a composite oxide; and
- a noble metal loaded on the support;
- the composite oxide being expressed by the general formula (3):

$$(Al_2O_3)_a\ (CeO_2)_b\ (ZrO_2)_{1-b}\ (Y_2O_3)_c\ (La_2O_3)_d \quad (3)$$

wherein the values of "a", "b", "c" and "d" are molar ratios falling within a range of
$0.4 \leq a \leq 2.5$;
$0.2 \leq b \leq 0.7$;
$0.01 \leq c \leq 0.2$; and
$0.005 \leq d \leq 0.1$, respectively;
and

- the support including particles having a particle diameter of 5 μm or more in an amount of 30 % by volume or more; and
- wherein the particle diameter means the average particle diameter of the mixtures including the porous oxides and composite oxides.

6. The catalyst according to claim 5, wherein said support includes particles having a particle diameter of 5 µm or more in an amount of 40 % by volume or more, preferably in an amount of 50 % by volume or more.

7. The catalyst according to claims 1 to 6, wherein at least one additive element selected from the group consisting of alkali metals, alkaline earth metals, rare earth elements and transition elements is contained in the composite oxide in an amount of 0.05 or less by molar ratio.

8. The catalyst according to claims 1 to 7, wherein the $CeO_2$ and the $ZrO_2$ contained in the composite oxide form a solid solution, and the solubility of the $ZrO_2$ is 50 % or more in the composite oxide, preferably 70 % or more in the composite oxide, more preferably 80 % or more in the composite oxide.

9. The catalyst according to claims 1 to 8, wherein the mean crystal grain diameter of the ceria-zirconia solid solution contained in the composite oxide is 10 nm or less by an X-ray diffraction measurement after heating said support at 1,000 °C for 5 h or more.

10. The catalyst according to claims 1 to 9, wherein the weight ratio of the porous oxide and the composite oxide in said support satisfies the condition 0.23 ≤ [the composite oxide / (the porous oxide + the composite oxide)] ≤ 0.7, preferably satisfies the condition 0.4 ≤ [the composite oxide / (the porous oxide + the composite oxide)] ≤ 0.6.

11. The catalyst according to claims 1 to 10, wherein Pd is loaded on the composite oxide. and at least one of Pt and Rh is loaded on said support.

**Patentansprüche**

1. Ein Katalysator zur Reinigung von Abgasen, der
einen Träger, der ein Gemisch umfasst, das ein poröses Oxid und ein Mischoxid enthält, und
ein auf dem Träger aufgebrachtes Edelmetall umfasst,
wobei das Mischoxid die allgemeine Formel (1)

$$(Al_2O_3)_a(CeO_2)_b(ZrO_2)_{1-b}(Y_2O_3)_c \quad (1)$$

hat, wobei die Werte von "a", "b" und "c" Molverhältnisse sind, die in einem Bereich von
$0,4 \leq a \leq 2,5$,
$0,2 \leq b \leq 0,7$ bzw.
$0,01 \leq c \leq 0,2$
liegen, und
der Träger Teilchen mit einem Teilchendurchmesser von 5 µm oder mehr in einer Menge von 30 Vol.-% oder mehr umfasst, und
der Teilchendurchmesser für den durchschnittlichen Teilchendurchmesser des Gemischs steht, das die porösen Oxide und die Mischoxide umfasst.

2. Katalysator nach Anspruch 1, bei dem der Träger Teilchen mit einem Teilchendurchmesser von 5 µm oder mehr in einer Menge von 40 Vol.-% oder mehr, vorzugsweise in einer Menge von 50 Vol.-% oder mehr umfasst.

3. Ein Katalysator zur Reinigung von Abgasen, der
einen Träger, der ein Gemisch umfasst, das ein poröses Oxid und ein Mischoxid enthält, und
ein auf dem Träger aufgebrachtes Edelmetall umfasst,
wobei das Mischoxid die allgemeine Formel (2)

$$(Al_2O_3)_a(CeO_2)_b(ZrO_2)_{1-b}(La_2O_3)_d \quad (2)$$

hat, wobei die Werte von "a", "b" und "d" Molverhältnisse sind, die in einem Bereich von
$0,4 \leq a \leq 2,5$,
$0,2 \leq b \leq 0,7$ bzw.

$0{,}005 \leq d \leq 0{,}1$
liegen, und

der Träger Teilchen mit einem Teilchendurchmesser von 5 µm oder mehr in einer Menge von 30 Vol.-% oder mehr umfasst, und

der Teilchendurchmesser für den durchschnittlichen Teilchendurchmesser des Gemischs steht, das die porösen Oxide und die Mischoxide umfasst.

**4.** Katalysator nach Anspruch 3, bei dem der Träger Teilchen mit einem Teilchendurchmesser von 5 µm oder mehr in einer Menge von 40 Vol.-% oder mehr, vorzugsweise in einer Menge von 50 Vol.-% oder mehr umfasst.

**5.** Ein Katalysator zur Reinigung von Abgasen, der

einen Träger, der ein Gemisch umfasst, das ein poröses Oxid und ein Mischoxid enthält, und
ein auf dem Träger aufgebrachtes Edelmetall umfasst,
wobei das Mischoxid die allgemeine Formel (3)

$$(Al_2O_3)_a(CeO_2)_b(ZrO_2)_{1-b}(Y_2O_3)_c(La_2O_3)_d \quad (3)$$

hat, wobei die Werte von "a", "b", "c" und "d" Molverhältnisse sind, die in einem Bereich von
$0{,}4 \leq a \leq 2{,}5$,
$0{,}2 \leq b \leq 0{,}7$,
$0{,}01 \leq c \leq 0{,}2$ bzw.
$0{,}005 \leq d \leq 0{,}1$
liegen, und

der Träger Teilchen mit einem Teilchendurchmesser von 5 µm oder mehr in einer Menge von 30 Vol.-% oder mehr umfasst, und

der Teilchendurchmesser für den durchschnittlichen Teilchendurchmesser des Gemischs steht, das die porösen Oxide und die Mischoxide umfasst.

**6.** Katalysator nach Anspruch 5, bei dem der Träger Teilchen mit einem Teilchendurchmesser von 5 µm oder mehr in einer Menge von 40 Vol.-% oder mehr, vorzugsweise in einer Menge von 50 Vol.-% oder mehr umfasst.

**7.** Katalysator nach einem der Ansprüche 1 bis 6, bei dem in dem Mischoxid mindestens ein Zusatzelement, das aus der Gruppe bestehend aus Alkalimetallen, Erdalkalimetallen, Seltenerdelementen und Übergangselementen ausgewählt ist, in einer Menge von 0,05 oder weniger, bezogen auf das Molverhältnis, enthalten ist.

**8.** Katalysator nach einem der Ansprüche 1 bis 7, bei dem das $CeO_2$ und das $ZrO_2$, die in dem Mischoxid enthalten sind, eine feste Lösung bilden, und die Löslichkeit des $ZrO_2$ in dem Mischoxid 50 % oder mehr, vorzugsweise 70 % oder mehr und mehr bevorzugt 80 % oder mehr beträgt.

**9.** Katalysator nach einem der Ansprüche 1 bis 8, bei dem der mittlere Kristallkorndurchmesser der festen Ceroxid-Zirkoniumoxid-Lösung, die in dem Mischoxid enthalten ist, bei der Bestimmung mit einer Röntgenbeugungsmessung nach dem Erhitzen des Trägers bei 1000°C für 5 Stunden oder mehr 10 nm oder weniger beträgt.

**10.** Katalysator nach einem der Ansprüche 1 bis 9, bei dem das Gewichtsverhältnis des porösen Oxids und des Mischoxids in dem Träger die Bedingung 0,25 ≤ [Mischoxid/(poröses Oxid + Mischoxid)] ≤ 0,7, vorzugsweise die Bedingung 0,4 ≤ [Mischoxid/(poröses Oxid + Mischoxid)] ≤ 0,6 erfüllt.

**11.** Katalysator nach einem der Ansprüche 1 bis 10, bei dem Pd auf das Mischoxid aufgebracht ist und mindestens eines von Pt und Rh auf den Träger aufgebracht ist.

## Revendications

**1.** Un catalyseur pour épurer des gaz d'échappement, comprenant

- un support comportant un mélange contenant un oxyde poreux et un oxyde composite ; et

- un métal noble chargé sur le support ;
- l'oxyde composite étant exprimé par la formule générale (1 ) :

$$(Al_2O_3)_a(CeO_2)_b(ZrO_2)_{1-b}(Y_2O_3)_c \quad (1)$$

dans laquelle les valeurs de "a", "b" et "c" sont des rapports molaires tombant dans un intervalle de
0,4 ≤a≤ 2,5;
0,2 ≤b≤ 0,7 ; et
0,01 ≤c≤ 0,2, respectivement ;
et

- le support comportant des particules ayant un diamètre de particule de 5 µm ou supérieur à 5 µm en une quantité de 30 % en volume ou supérieure à 30 % en volume ; et
- le diamètre des particules signifiant le diamètre moyen des particules des mélanges, comprenant les oxydes poreux et les oxydes composites.

**2.** Catalyseur suivant la revendication 1, dans lequel le support comporte des particules ayant un diamètre de particule de 5 µm ou supérieur à 5 µm en une quantité de 40 % en volume ou supérieure à 40 % en volume, de préférence en une quantité de 50 % en volume ou supérieure à 50 % en volume.

**3.** Un catalyseur pour épurer des gaz d'échappement, comprenant

- un support comportant un mélange contenant un oxyde poreux et un oxyde composite ; et
- un métal noble chargé sur le support ;
- l'oxyde composite étant exprimé par la formule générale (2) :

$$(Al_2O_3)_a(CeO_2)_b(ZrO_2)_{1-b}(La_2O_3)_d \quad (2)$$

dans laquelle les valeurs de "a", "b" et "c" sont des rapports molaires tombant dans un intervalle de
0,4≤a≤2,5;
0,2≤b≤0,7; et
0,005 ≤d≤ 0,1, respectivement ;
et

- le support comportant des particules ayant un diamètre de particule de 5 µm ou supérieur à 5 µm en une quantité de 30 % en volume ou supérieure à 30 % en volume ; et
- le diamètre des particules signifiant le diamètre moyen des particules des mélanges, comprenant les oxydes poreux et les oxydes composites.

**4.** Catalyseur suivant la revendication 3, dans lequel le support comporte des particules ayant un diamètre de particule de 5 µm ou supérieur à 5 µm en une quantité de 40 % en volume ou supérieure à 40 % en volume, de préférence en une quantité de 50 % en volume ou supérieure à 50 % en volume.

**5.** Un catalyseur pour épurer des gaz d'échappement, comprenant

- un support comportant un mélange contenant un oxyde poreux et un oxyde composite ; et
- un métal noble chargé sur le support ;
- l'oxyde composite étant exprimé par la formule générale (3) :

$$(Al_2O_3)_a(CeO_2)_b(ZrO_2)_{1-b}(Y_2O_3)_c(La_2O_3)_d \quad (3)$$

dans laquelle les valeurs de "a", "b", "c" et "d" sont des rapports molaires tombant dans un intervalle de
0,4≤a≤2,5;
0,2≤b≤0,7 ;

$0,01 \leq c \leq 0,2$ ; et
$0,005 \leq d \leq 0,1$, respectivement ;
et

- le support comportant des particules ayant un diamètre de particule de 5 µm ou supérieur à 5 µm en une quantité de 30 % en volume ou supérieure à 30 % en volume ; et
- le diamètre des particules signifiant le diamètre moyen des particules des mélanges, comprenant les oxydes poreux et les oxydes composites.

**6.** Catalyseur suivant la revendication 5, dans lequel le support comporte des particules ayant un diamètre de particule de 5 µm ou supérieur à 5 µm en une quantité de 40 % en volume ou supérieure à 40 % en volume, de préférence en une quantité de 50 % en volume ou supérieure à 50 % en volume.

**7.** Catalyseur suivant les revendications 1 à 6, dans lequel au moins un élément additif choisi dans le groupe consistant en des métaux alcalins, des métaux alcalino-terreux, des éléments de terres rares et des éléments de transition est contenu dans l'oxyde composite en une quantité de 0,05 ou inférieure à 0,05 en rapport molaire.

**8.** Catalyseur suivant les revendications 1 à 7, dans lequel le $CeO_2$ et le $ZrO_2$ contenus dans l'oxyde composite forment une solution solide et la solubilité du $ZrO_2$ est de 50 % ou de plus de 50 % dans l'oxyde composite, de préférence de 70 % ou de plus de 70 % dans l'oxyde composite et mieux encore de 80 % ou de plus de 80 % dans l'oxyde composite.

**9.** Catalyseur suivant les revendications 1 à 8, dans lequel le diamètre moyen de grain des cristaux de la solution solide d'oxyde de cérium et d'oxyde de zirconium contenue dans l'oxyde composite est de 10 nm ou est inférieur à 10 nm par une mesure de diffraction de rayons X après chauffage du support à 1000°C pendant 5 heures ou pendant plus de 5 heures.

**10.** Catalyseur suivant les revendications 1 à 9, dans lequel le rapport en poids de l'oxyde poreux et de l'oxyde composite dans le support satisfait à la condition $0,25 \leq$ [oxyde composite/ (oxyde poreux + oxyde composite)] $\leq 0,7$, satisfaisant, de préférence, à la condition $0,4 \leq$ [oxyde composite/ (oxyde poreux + oxyde composite)] $\leq 0,6$.

**11.** Catalyseur suivant les revendications 1 à 10, dans lequel Pd est chargé sur l'oxyde composite et au moins l'un de Pt et de Rh est chargé sur le support.

FIG. 1

FIG. 2

FIG. 3

361
250U

FIG. 4